(19) Europäisches Patentamt
European Patent Office
Office européen des brevets

(11) **EP 0 391 785 B1**

(12) **FASCICULE DE BREVET EUROPEEN**

(45) Date de publication et mention
de la délivrance du brevet:
**20.08.1997 Bulletin 1997/34**

(51) Int Cl.6: **G06F 5/06**, G06F 7/00,
H04N 7/167

(21) Numéro de dépôt: **90400902.4**

(22) Date de dépôt: **03.04.1990**

(54) **Dispositif et procédé d'écriture dans un dispositif de mémorisation de type pile**

Gerät und Verfahren zum Schreiben in einem Silospeichergerät

Device and method for writing in a fifo-type memory device

(84) Etats contractants désignés:
**DE ES GB IT**

(30) Priorité: **04.04.1989 FR 8904405**

(43) Date de publication de la demande:
**10.10.1990 Bulletin 1990/41**

(73) Titulaire: **LABORATOIRE EUROPEEN DE
RECHERCHES ELECTRONIQUES AVANCEES
92400 Courbevoie (FR)**

(72) Inventeur: **Guillon, Jean-Claude
F-92045 Paris la Défense (FR)**

(74) Mandataire: **Ruellan-Lemonnier, Brigitte et al
THOMSON multimedia,
46 quai A. Le Gallo
92648 Boulogne Cédex (FR)**

(56) Documents cités:
**EP-A- 0 260 886**

- ELECTRONIC ENGINEERING, vol. 43, no. 520,
juin 1971, page 61; HOFF: "Using
standard-length shift registers in custom-length
applications"
- W.N. CARR et al.: "MOS/LSI design and
application", 1972, pages 176-178, McGraw-Hill
M/A, New York, US

# Description

L'invention se rapporte principalement à un dispositif et à un procédé d'écriture dans un dispositif de mémorisation de type pile.

L'évolution de la technologie met à la disposition de l'ingénieur, pour la conception de ses circuits un nombre croissant de type de dispositifs de mémorisation. Certains de ces dispositifs de mémorisation très spécialisés permettent la simplification de la conception des dispositif électroniques. Toutefois leur utilisation en dehors de l'usage prévu par le fabricant peut s'avérer très difficile voir impossible.

Par exemple, les mémoires vives d'usage général (RAM en terminologie anglo-saxonne) présentent une possibilité d'utilisation très étendue mais nécessitent un circuit d'adressage susceptible de générer l'adresse à laquelle on désire inscrire l'information.

Au contraire, les mémoires de type pile comme par exemple les piles de type "premier-entrée, premier-sortie" (FIFO en terminologie anglo-saxonne) ne nécessitent pas de circuit d'adressage. Bien au contraire, l'utilisateur ne dispose pas d'accès au bus d'adresse de lecture/écriture. Par exemple dans la mémoire 1135 x 8 bits de type premier-entrée, premier-sortie commercialisée sous la référence μPD 41102 par la Société NEC CORPORATION on ne dispose que de 4 signaux de contrôle :

- $\overline{RSTR}$ : initialisation du compteur de lecture (Reset Read en terminologie anglo-saxonne) ;
- $\overline{RSTW}$ : initialisation du compteur d'écriture (Reset Write en terminologie anglo-saxonne) ;
- $\overline{RE}$ signal de contrôle lecture (Read enable en terminologie anglo-saxonne) ;
- $\overline{WE}$ : signal de contrôle d'écriture (Write enable en terminologie anglo-saxonne).

La présente invention a pour objet l'utilisation de mémoires de type pile ou registre à décalage avec possibilité d'écriture à partir d'une adresse désirée. Pour ce faire, on effectue une écriture d'informations non pertinentes de façon à amener le compteur à la valeur désirée. A partir de ce moment, on écrit des informations pertinentes que l'on désire stocker dans cette mémoire. Si cela s'avère nécessaire ou utile on réécrit des informations pertinentes par dessus les informations non pertinentes qui ont permis d'amener le compteur à l'adresse d'écriture désirée. On entend par informations non pertinentes des informations dont la lecture n'est pas nécessaire au processus mis en oeuvre.

La présente invention réalise cet objet par un dispositif de contrôle de dispositif de mémorisation selon la revendication 1.

Selon un mode de réalisation, l'invention comporte un dispositif caractérisé par le fait qu'il comporte un générateur de données non pertinentes.

Selon la revendication 3, l'invention comporte un dispositif de désembrouillage d'émission de télévision caractérisé par le fait qu'il comporte un dispositif de contrôle conforme à la revendication 1.

L'invention réalise son objet aussi par un procédé de contrôle d'un dispositif de mémorisation selon la revendication 4.

Selon un mode de réalisation, l'invention comporte un procédé caractérisé par le fait que les données pertinentes sont des signaux vidéo numérisés correspondant à une ligne à afficher.

Selon un mode de réalisation, l'invention comporte un procédé caractérisé par le fait qu'il comporte une étape postérieure à l'étape d'écriture de données non pertinentes, d'écriture d'informations pertinentes aux adresses des données non pertinentes.

La présente invention sera mieux comprise au moyen de la description ci-après et des figures annexées données comme des exemples non limitatifs parmi lesquels :

- la figure 1 est un schéma d'un exemple de réalisation du dispositif selon la présente invention ;
- la figure 2 est un diagramme d'un premier mode de fonctionnement du dispositif selon la présente invention ;
- la figure 3 est un diagramme d'un second mode de fonctionnement du dispositif selon la présente invention.

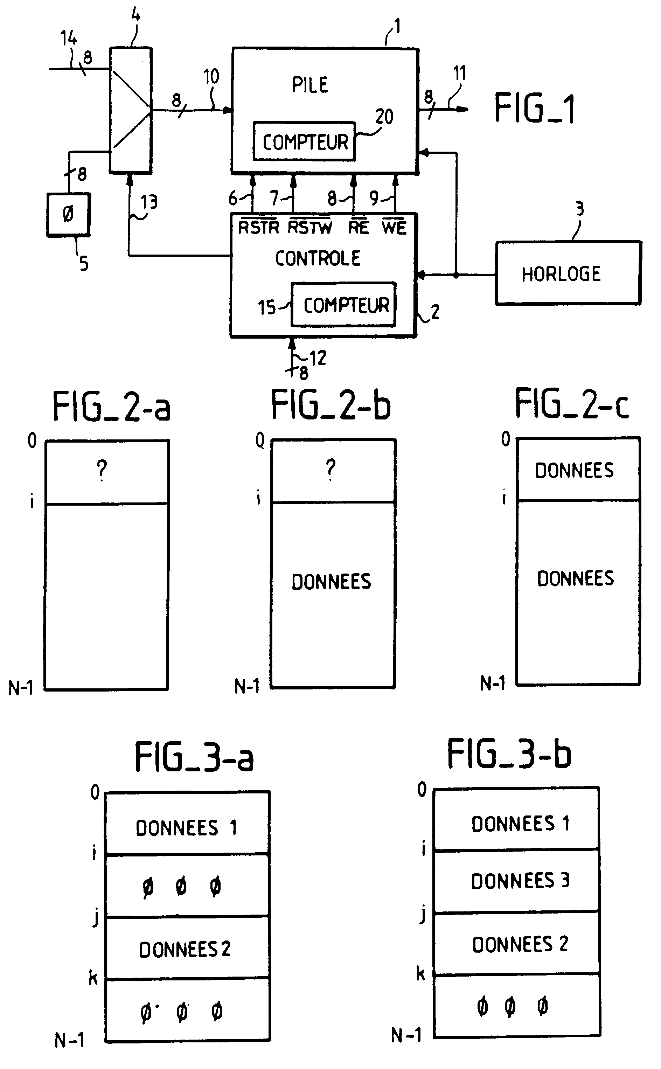

Sur la figure 1, on peut voir une pile 1, avantageusement de type premier-entrée, premier-sortie, connectée à un dispositif de contrôle 2. La pile 1 est connectée en entrée à un bus de données 10 par exemple sur 8 bits. La pile 1 est connectée en sortie à un bus de données 11 par exemple sur 8 bits. Le dispositif de contrôle 2 fournit à la pile 1 un signal de contrôle 6 $\overline{RSTR}$, un signal de contrôle 7 $\overline{RSTW}$, un signal de contrôle 8 $\overline{RE}$ et un signal de contrôle 9 $\overline{WE}$. Avantageusement, la pile 1 et le dispositif de contrôle 2 sont reliés à une même horloge 3. Le dispositif de contrôle 2 reçoit par un bus d'adresse 12, dont la largeur dépend de la capacité de la pile 1 l'adresse, à laquelle ou, avantageusement, à partir de laquelle on désire inscrire une information dans la pile 1. Pour amener la pile 1 à l'adresse désirée après un signal d'initialisation du compteur d'écriture $\overline{RSTW}$ le dispositif de contrôle 2 autorise par un signal $\overline{WE}$ l'écriture dans la pile 1 l'information quelconque et ce jusqu'à amener le compteur interne de la pile 1 à la valeur désirée.

Dans une première variante de réalisation du dispositif selon la présente invention le dispositif de contrôle 2 autorise l'écriture de la pile 1 l'information présente sur le bus des données 10 telles quelles soient. Toute information peut être par exemple un signal numérisé avant l'instant où le signal pertinent sera présent sur le bus 10. Par exemple, si on désire stocker dans la pile 1 un signal vidéo correspondant à une ligne à afficher, l'information non pertinente stockée peut être une partie d'une information vidéo numérisée concernant la ligne précédente de l'image.

Dans une seconde variante de réalisation du dispositif selon la présente invention le dispositif comporte un générateur 5 d'informations non pertinentes. Le générateur 5 est par exemple un générateur de mots composés uniquement de "1", uniquement des "φ" ou un générateur pseudo-aléatoire. On peut de façon simple réaliser un générateur de "φ" ou de "1" en reliant des fils à des tensions électriques correspondant au niveau logique φ ou 1 désiré.

Avantageusement, le générateur 5 d'informations non pertinentes est relié au bus 10 des données par un multiplexeur 4. Le multiplexeur 4 peut par exemple être commandé par la ligne 13 connectée au dispositif de contrôle 2 qui, selon la valeur du compteur de la pile 1, connecte au bus de données 10 soit le bus de données externes 14 soit le dispositif 5.

Dans la mesure où justement le compteur de la pile 1 n'est pas accessible, le dispositif de contrôle 2 comporte avantageusement un compteur 15 fonctionnant de façon analogue à celui de la pile 1 pour connaître à tout instant la valeur actuelle du compteur de la pile 1. De plus, le dispositif de contrôle comporte une logique permettant la remise à zéro du compteur 15 ainsi que l'activation des signaux 6,7,8 et/ou 9 désirée.

Sur la figure 2, on peut voir un exemple de fonctionnement du dispositif selon la présente invention. Sur une pile, les capacités N des adresses sont comprises entre φ et N-1. Si par exemple on désire écrire certaines données à partir de l'adresse i comprise entre 0 et N-1 on commence par effectuer une phase de préparation illustrée sur la figure 2a. Pendant la phase de préparation on écrit des informations non pertinentes entre l'adresse 0 et l'adresse i. A partir de ce moment on entre dans une première phase pertinente illustrée sur la figure 2b, on écrit des données pertinentes, comme on le désire, à partir de la valeur i et par exemple jusqu'à la valeur d'adresse N-1. Cette phase peut être complétée par la phase illustrée sur la figure 2c d'écriture des données pertinentes entre l'adresse 0 et i, ces valeurs effacent les données non pertinentes inscrites pendant la phase de préparation illustrée sur la figure 2a.

Le procédé illustré sur la figure 2 sert par exemple au désembrouillage des signaux de télévision. Dans un tel dispositif la partie active du signal vidéo d'une ligne a été inversée autour d'un point de coupure. On commence par écrire à partir de l'adresse correspondant au point de coupure le signal vidéo. L'adresse du point de coupure correspondant à l'adresse i sur la figure 2. Pour ce faire il est donc nécéssaire d'emmener le compteur interne de la pile 1 de la figure 1 à l'adresse i. Cela est effectué par exemple en stockant le signal vidéo présent sur le bus 10 avant que ne commence la partie active de la ligne vidéo qui nous intéresse. Par exemple on stocke une partie du signal vidéo correspondant à la ligne précédente. Une fois que l'on a écrit la partie du signal vidéo entre l'adresse i et l'adresse N-1 il est possible d'effectuer l'écriture entre l'adresse φ et l'adresse i de la partie du signal vidéo qui a été permutée. Dans la mesure où on a effectué lors de l'embrouillage à l'émission, une première permutation circulaire de deux segments de la partie active du signal vidéo d'une ligne, et que lors de l'écriture de la pile 1 de la figure 1 on a effectué une seconde permutation circulaire, on obtient dans la pile 1 une ligne d'image désembrouillée.

Sur la figure 3, on peut voir un second exemple de mode de fonctionnement de la présente invention. Si par exemple on désire écrire un premier paquet de données entre l'adresse 0 et i, un second paquet de données entre l'adresse j et k et un troisième paquet de données entre l'adresse i et j, φ<i<j<k<N-1, et que le troisième paquet de données est disponible après le second paquet de données il est possible d'écrire entre l'adresse φ et i le premier paquet de données. Puis on écrit des informations non pertinentes entre i et j. Dans l'exemple illustré sur la figure 3, on a écrit des mots composés uniquement de "φ". Puis on écrit les données du second paquet entre l'adresse j et k. On remet le compteur de la pile 1 à φ en écrivant par exemple des mots composés de "φ" entre l'adresse k et l'adresse N-1. La fin de cette étape est illustrée sur la figure 3b. En réécrivant le paquet de données 1 entre φ et i soit, si le type de mémoire le permet, en effectuant une lecture de données entre φ et i pour avancer le compteur de la pile jusqu'à la valeur i. A ce moment là on effectue une inscription du troisième paquet de données entre l'adresse i et l'adresse j. Entre l'adresse k et l'adresse N-1 on laisse les mots composés de φ. Ces mots composés de φ peuvent ne pas du tout s'avérer gênants dans la suite d'exploitation de l'information stockée dans la pile 1. La réécriture des données 1 entre l'adresse φ et l'adresse I peut être effectuée soit par la connexion de la sortie à l'entrée du dispositif de mémorisation 1 soit en générant ces informations de façon externe une seconde fois.

La présente invention s'applique notamment à l'utilisation de mémoires spéciales pour des usages qui n'ont pas été prévus par le fabricant.

Elle s'applique plus particulièrement à l'utilisation de piles de type premier-entrée, premier-sortie au désembrouillage d'images de télévision.

**Revendications**

1. Dispositif de contrôle d'un dispositif de mémorisation (1), ledit dispositif de mémorisation comportant un premier compteur d'adresses (20) non accessible et un bus d'adresses non accessible, ledit dispositif de contrôle étant caractérisé par le fait qu'il comporte :

   - un second compteur d'adresses accessible (15) fonctionnant de façon analogue audit premier compteur pour connaître la valeur dudit premier compteur d'adresses (20),

- des moyens d'initialiser lesdits compteurs (15, 20) par remise à zéro (7,2),
- des moyens (7, 9) permettant de faire avancer les compteurs d'adresses (15, 20) à une valeur désirée en effectuant une écriture de données non pertinentes dans le dispositif de mémorisation (1),

et permettant l'écriture de données pertinentes dans le dispositif de mémorisation (1).

2. Dispositif selon la revendication 1, caractérisé en ce qu'il comporte un générateur de données non-pertinentes.

3. Dispositif de désembrouillage d'émissions de télévision dans lequel des parties de lignes du signal vidéo ont été inversées autour d'un point de coupure, caractérisé en ce qu'il comprend :

- deux piles de type premier-entré premier-sortie,
- un dispositif de contrôlé conforme à l'une des revendications précédentes, lesdites piles faisant partie dudit dispositif de mémorisation,

ledit dispositif de contrôle faisant avancer le compteur d'adresse d'une pile à l'adresse correspondant au point de coupure avant écriture dans ladite pile.

4. Procédé de contrôle d'un dispositif de mémorisation (1), ledit dispositif de mémorisation comportant un premier compteur d'adresses (20) non accessible et un bus d'adresses non accessible, ledit procédé étant caractérisé par le fait qu'il comporte les étapes :

- d'initialisation par remise à zéro (2, 7) du premier compteur d'adresses (20) et d'un second compteur d'adresses (15) accessible fonctionnant de façon analogue audit premier compteur pour connaître la valeur dudit premier compteur d'adresses (20),
- d'incrémentation desdits compteurs par l'écriture de données non pertinentes dans ledit dispositif de mémorisation (1) jusqu'à l'obtention d'une adresse désirée,
- d'écriture de données pertinentes dans ledit dispositif de mémorisation (1).

5. Procédé selon la revendication 4, caractérisé en ce que les données pertinentes sont des signaux vidéo numérisés correspondant à une ligne à afficher.

6. Procédé selon l'une des revendications 4 ou 5, caractérisé en ce qu'il comporte une étape postérieure à l'étape d'écriture de données non pertinentes, d'écriture d'informations pertinentes aux adresses auxquelles ont été écrites lesdites données non pertinentes.

## Patentansprüche

1. Steuervorrichtung einer Speichervorrichtung (1), wobei die besagte Speichervorrichtung einen ersten, nicht zugänglichen Adressenzähler (20) und einen nicht zugänglichen Adreßbus umfaßt, wobei die besagte Steuervorrichtung dadurch gekennzeichnet ist, daß sie umfaßt:

- einen zweiten, zugänglichen Adressenzähler (15), der auf analoge Weise wie der besagte erste Zähler funktioniert, um den Wert des besagten ersten Adressenzählers (20) zu kennen,
- Mittel zum Initialisieren der besagten Zähler (15, 20) durch Rückstellen auf Null (7, 2),
- Mittel (7, 9), die es ermöglichen, die Adressenzähler (15, 20) auf einen gewünschten Wert vorzustellen, indem ein Schreiben von nicht relevanten Daten in die Speichervorrichtung (1) durchgeführt wird,

und das Schreiben von relevanten Daten in die Speichervorrichtung (1) ermöglicht.

2. Vorrichtung nach Anspruch 1, dadurch gekennzeichnet, daß sie einen Generator von nicht relevanten Daten umfaßt.

3. Vorrichtung zur Entschlüsselung von Fernsehsendungen, bei der Teile von Zeilen des Videosignals um einen Trennpunkt herum invertiert worden sind, dadurch gekennzeichnet, daß sie umfaßt:

- zwei Stapelspeicher vom Typ "First-in-First-out",
- eine Steuervorrichtung nach einem der vorhergehenden Ansprüche, wobei die besagten Stapelspeicher zu der besagten Speichervorrichtung gehören,

wobei die besagte Steuervorrichtung das Vorstellen des Adressenzählers eines Stapelspeichers auf die dem Trennpunkt entsprechende Adresse vor dem Schreiben in den besagten Stapelspeicher bewirkt.

4. Verfahren zur Steuerung einer Speichervorrichtung (1), wobei die besagte Speichervorrichtung einen ersten, nicht zugänglichen Adressenzähler (20) und einen nicht zugänglichen Adreßbus umfaßt, wobei das besagte Verfahren dadurch gekennzeichnet ist, daß es die folgenden Schritte umfaßt:

- Initialisieren des ersten Adressenzählers (20) und eines zweiten, zugänglichen Adressenzählers (15), der auf analoge Weise wie der besagte erste Zähler funktioniert, um den Wert des besagten ersten Adressenzählers (20) zu kennen, durch Rückstellen auf Null (2, 7),
- Inkrementierung der besagten Zähler durch das Schreiben von nicht relevanten Daten in die besagte Speichervorrichtung (1), bis eine gewünschte Adresse erreicht wird,
- Schreiben von relevanten Daten in die besagte Speichervorrichtung (1).

5. Verfahren nach Anspruch 4, dadurch gekennzeichnet, daß die relevanten Daten digitalisierte Videosignale sind, die einer anzuzeigenden Zeile entsprechen.

6. Verfahren nach einem der Ansprüche 4 oder 5, dadurch gekennzeichnet, daß es einen dem Schritt des Schreibens von nicht relevanten Daten nachfolgenden Schritt des Schreibens von relevanten Informationen unter den Adressen, unter denen die besagten nicht relevanten Daten geschrieben wurden, umfaßt.

## Claims

1. Device for controlling a storage device (1), the said storage device including a first non-accessible address counter (20) and a non-accessible address bus, the said control device being characterized in that it includes:

   - a second accessible address counter (15) operating in a similar manner to the said first counter so as to ascertain the value of the said first address counter (20),
   - means of initializing the said counters (15, 20) by resetting to zero (7, 2),
   - means (7, 9) making it possible to advance the address counters (15, 20) to a desired value while writing non-pertinent data to the storage device (1),
   - and making it possible to write pertinent data to the storage device (1).

2. Device according to Claim 1, characterized in that it includes a generator of non-pertinent data.

3. Device for descrambling television transmissions, in which parts of lines of the video signal have been inverted about a cut point, characterized in that it comprises:

   - two stacks of first-in, first-out type,
   - a control device in accordance with one of the preceding claims, the said stacks forming part of the said storage device,

the said control device advancing the address counter of a stack to the address corresponding to the cut point before writing to the said stack.

4. Method of controlling a storage device (1), the said storage device including a first non-accessible address counter (20) and a non-accessible address bus, the said method being characterized in that it includes the steps:

   - of initializing by resetting to zero (2, 7) the first address counter (20) and a second accessible address counter (15) operating in a similar manner to the said first counter so as to ascertain the value of the said first address counter (20),
   - of incrementing the said counters by writing non-pertinent data to the said storage device (1) until a desired address is obtained,
   - of writing pertinent data to the said storage device (1).

5. Method according to Claim 4, characterized in that the pertinent data are digitized video signals corresponding to a line to be displayed.

6. Method according to one of Claims 4 or 5, characterized in that it includes a step subsequent to the step of writing non-pertinent data, of writing pertinent information at the addresses at which the said non-pertinent data have been written.

FIG_1

FIG_2-a

FIG_2-b

FIG_2-c

FIG_3-a

FIG_3-b